# EUROPÄISCHE PATENTSCHRIFT

(11) **EP 3 792 085 B1**
(45) Veröffentlichungstag und Bekanntmachung des Hinweises auf die Patenterteilung: **29.09.2021**
(21) Anmeldenummer: 20195002.9
(22) Anmeldetag: 08.09.2020
(51) Int. Cl.: B60C 23/04

(54) **REIFENDRUCKSENSOR UND ANORDNUNG MIT EINEM REIFENVENTIL UND EINEM REIFENDRUCKSENSOR**
TYRE PRESSURE SENSOR AND ASSEMBLY COMPRISING A TYRE VALVE AND A TYRE PRESSURE SENSOR
CAPTEUR DE PRESSION DE PNEU ET AGENCEMENT DOTÉ D'UNE VALVE DE PNEU ET D'UN CAPTEUR DE PRESSION DE PNEU

(30) Priorität: 10.09.2019 DE 102019213714
(43) Veröffentlichungstag der Anmeldung: 17.03.2021
(73) Patentinhaber: TireCheck GmbH, 89520 Heidenheim (DE)
(72) Erfinder: Markert, Christian, 89542 Herbrechtingen (DE)
(74) Vertreter: Dr. Weitzel & Partner

(56) Entgegenhaltungen:
- EP-A1- 0 417 704
- WO-A1-96/36861
- TW-A- 200 911 570
- US-A1- 2019 001 763
- US-B2- 9 321 314

## Beschreibung

Die vorliegende Erfindung betrifft einen Reifendrucksensor und eine Anordnung mit einem Reifenventil und einem Reifendrucksensor.

Fahrzeugräder, insbesondere Kraftfahrzeugräder, weisen eine Felge auf, die in der Regel aus Stahl oder Aluminium beziehungsweise aus einer Aluminiumlegierung hergestellt ist und auf die ein Reifen aufgezogen wird. Um den Innenraum zwischen Reifen und Felge, vorliegend Reifenhohlraum genannt, mit Druckluft zu befüllen, ist ein Reifenventil vorgesehen, das durch das Felgenbett der Fahrzeugfelge gesteckt ist, sodass es mit seinem Luftauslassende innerhalb des Reifenhohlraumes angeordnet ist, und an seinem Lufteinlassende von außerhalb des Fahrzeugrades zugänglich ist. Am Lufteinlassende kann dann eine Druckluftquelle angeschlossen werden, die ein Rückschlagventil innerhalb des Reifenventils aufdrückt, sodass Drucklauft aus der Druckluftquelle in den Reifenhohlraum strömt. Wenn die Druckluftquelle wieder entfernt wird, verhindert das Rückschlagventil, dass sich der Reifenhohlraum über das Reifenventil entleert.

Der Luftdruck im Reifenhohlraum wird in der Praxis zunehmend mit einem Reifendrucksensor überwacht. In der Regel ist dabei der Reifendrucksensor innerhalb des Reifenhohlraumes angeordnet, weist einen Druckaufnehmer und einen Sender auf und übermittelt mittels des Senders vom Druckaufnehmer aufgenommene Druckwerte an einen Empfänger im Fahrzeug.

Besonders für LKW-Reifenventile, wie sie die vorliegende Erfindung insbesondere betrifft, sind jedoch auch Lösungen bekannt, bei denen der Reifendrucksensor außerhalb des Reifenhohlraumes am Lufteinlassende des Reifenventils aufgeschraubt wird und den Luftdruck im Reifenventil erfasst. Hierzu weist der Reifendrucksensor ein Hülsenteil auf, das unmittelbar auf das Reifenventil aufgeschraubt wird und dabei das Rückschlagventil im Reifenventil öffnet, sodass sich der Luftdruck aus dem Reifenventil in das Hülsenteil ausbreitet. Um eine unerwünschte Entlüftung des Reifenhohlraumes zu vermeiden, ist das Hülsenteil mit einem Rückschlagventil versehen, sodass der mit Druckluft befüllte Innenraum des Hülsenteils gegenüber der Umgebung abgedichtet wird. Der Luftdruck innerhalb des Innenraumes des Hülsenteils wird dann mit einem Druckaufnehmer des Reifendrucksensors gemessen, wobei der Reifendrucksensor analog den innerhalb des Reifenhohlraumes positionierten Sensoren ebenfalls einen Sender aufweist, der den vom Druckaufnehmer erfassten Druck an einen fahrzeugseitigen Empfänger sendet.

Insbesondere bei LKW-Rädern sind die Reifenventile oft abgewinkelt ausgeführt, sodass deren Schaft parallel zur Felgenoberfläche verläuft. Wenn nun der Reifendrucksensor mit seinem Hülsenteil auf das Reifenventil aufgeschraubt wird, so muss er dabei um seine Längsachse, die sich in der Axialrichtung des Lufteinlassendes des Reifenventils erstreckt, verdreht werden. Zudem beschränkt der Abstand zwischen dem Ventilschaft und der parallelen Oberfläche der Felge den Außendurchmesser des Reifendrucksensors.

Aufgrund der begrenzten räumlichen Verhältnisse werden bekannte Reifendrucksensoren, die am Lufteinlassende eines Reifenventils aufgeschraubt werden, vergleichsweise lang und mit einem kleinen Durchmesser ausgeführt. Die Bauteile des Reifendrucksensores werden möglichst gleichmäßig um die Längsachse verteilt, um dies erreichen zu können.

Nachteilig ist, dass der Reifendrucksensor damit sehr weit bis zum seitlichen Ende der Felge oder darüber hinaus reicht und zudem die Möglichkeit der Positionierung der notwendigen Bauteile innerhalb des Reifendrucksensors eingeschränkt ist.

WO 96/36861 A1 offenbart einen Reifendrucksensor mit einem Gehäuse beinhaltend einen Sender und einen Druckaufnehmer, wobei das Gehäuse ein Hülsenteil mit einem Innengewinde zum Aufschrauben auf ein Reifenventil aufweist.

US 6 167 900 B1 offenbart ein Reifenventil mit extern angeordneten O-Ringen, über welche die Hülse eines Reifendrucksensors geschoben werden kann, wobei die Hülse zwischen einem Bund des Reifenventils und einer auf das Reifenventil aufgeschraubten Mutter verklemmt wird.

US 2008/0110267 A1 offenbart eine weitere Anordnung eines Gehäuses eines Reifendrucksensors auf einem Reifenventil, wobei auch hier das Gehäuse auf dem Reifenventil verklemmt wird.

US 5 665 908 A offenbart eine Entlüftungsvorrichtung für einen Reifen.

DE 10 2017 128 466 A1 offenbart einen weiteren Reifendrucksensor, der gegen Verdrehung gesichert auf einem Reifenventil montiert wird.

CN 201856591 U und US 7 421 902 B2 offenbaren einen auf einem Reifenventil verschraubten Reifendrucksensor.

DE 10 2014 205 923 A1 offenbart das Verklemmen eines Reifendrucksensors auf einem gebogenen Reifenventil.

Zum weiteren Stand der Technik wird verwiesen auf FR 2 992 258 A1 und US 4 823 835 A.

Der vorliegenden Erfindung liegt die Aufgabe zugrunde, einen Reifendrucksensor der eingangs dargestellten Art, der außerhalb des Reifenhohlraumes am Lufteinlassende des Reifenventils befestigt wird, anzugeben, der eine flexible Gestaltung bei der Anordnung der Bauteile, wie Druckaufnehmer und Sender und insbesondere eines elektrischen Energiespeichers und einer Steuervorrichtung innerhalb des Reifendrucksensors, ermöglicht.

Die erfindungsgemäße Aufgabe wird durch einen Reifendrucksensor mit den Merkmalen von Anspruch 1 gelöst. In den abhängigen Ansprüchen werden vorteilhafte und besonders zweckmäßige Ausgestaltungen der Erfindung, sowie eine Anordnung mit einem Reifenventil und einem Reifendrucksensor angegeben.

Ein erfindungsgemäßer Reifendrucksensor, der wie dargelegt im Unterschied zu im Reifenhohlraum angeordneten Reifendrucksensoren im bestimmungsgemäßen Gebrauch außerhalb des Reifenhohlraumes am Reifenventil befestigt wird, weist wenigstens einen Druckaufnehmer, einen Sender und einen den Druckaufnehmer und den Sender tragendes Gehäuse auf. Prinzipiell könnten der Sender und/oder der Druckaufnehmer derart am Gehäuse positioniert sein, dass sie nicht vollständig vom Gehäuse eingeschlossen werden, also außen an einem Gehäusebereich befestigt sind. Bevorzugt umschließt das Gehäuse jedoch den Sender und/oder den Druckaufnehmer vollständig und weist einen entsprechenden Innenraum auf, in welchem der Druckaufnehmer und/oder der Sender, insbesondere zusammen mit einem Energiespeicher und einer Steuervorrichtung, positioniert sind.

Erfindungsgemäß ist das Gehäuse eingerichtet, an einem Lufteinlassende eines Reifenventils befestigt zu werden. Beispielsweise wird das Gehäuse an einer Stelle am Reifenventil befestigt, wo ohne den Reifendrucksensor eine Ventilkappe aufgeschraubt wird. Die Ventilkappe kann entsprechend abgeschraubt werden und der Reifendrucksensor kann an dem Reifenventil an dessen Lufteinlassende anstelle der Ventilkappe aufgeschraubt werden. Grundsätzlich sind andere Lösungen möglich, beispielsweise das Vorsehen eines Zwischenteils oder einer Verlängerung am Reifenventil und das Aufschrauben des Reifendrucksensors auf dieses Bauteil.

Erfindungsgemäß weist das Gehäuse ein Hülsenteil und ein Aufnahmeteil auf. Das Hülsenteil weist ein endseitiges Innengewinde zum (wenigstens mittelbaren) Aufschrauben des Hülsenteils auf das Reifenventil auf. Das Aufnahmeteil ist angeordnet, um den Druckaufnehmer und den Sender zu tragen. Entsprechend sind der Druckaufnehmer und der Sender in dem oder an dem Aufnahmeteil angeordnet, je nachdem, ob der Druckaufnehmer und der Sender vollständig vom Aufnahmeteil umschlossen werden.

Erfindungsgemäß ist das Aufnahmeteil im montierten Zustand verdrehbar gegenüber dem Hülsenteil am Hülsenteil angeschlossen.

Durch die Erfindung kann das Hülsenteil auf das Reifenventil aufgeschraubt werden, ohne dass das Aufnahmeteil für den Druckaufnehmer und den Sensor mit verdreht werden muss. Demgemäß kann das Aufnahmeteil mit einem vergleichsweise großen Durchmesser ausgeführt sein, da es sich nicht mehr konzentrisch zum Hülsenteil erstrecken muss. Der Durchmesser des Aufnahmeteils kann über einem Umfangsabschnitt des Aufnahmeteils größer ausgeführt sein als der Abstand des Reifenventilschafts von der Felge.

Bevorzugt umschließt das Aufnahmeteil das Hülsenteil in Umfangsrichtung teilweise oder vollständig und wird verdrehbar um das Hülsenteil vom Hülsenteil getragen.

Das Aufnahmeteil ist bevorzugt exzentrisch zur Verdrehachse und zum Hülsenteil angeordnet, um die vorgenannten Vorteile maximal auszuschöpfen.

Bevorzugt sind am oder im Aufnahmeteil ferner ein elektrischer Energiespeicher und eine Steuervorrichtung angeordnet, wobei die Steuervorrichtung vom elektrischen Energiespeicher mit elektrischer Energie versorgt wird und den Druckaufnehmer sowie den Sender steuert. Insbesondere werden auch der Druckaufnehmer und der Sender vom elektrischen Energiespeicher mit elektrischer Energie versorgt.

Wie dargelegt, kann das Aufnahmeteil wenigstens einen Innenraum aufweisen, in welchem der Druckaufnehmer und der Sender und insbesondere der Energiespeicher und die Steuervorrichtung vom Material des Aufnahmeteils vollständig umschlossen positioniert sind.

Gemäß einer besonders bevorzugten Ausgestaltung der Erfindung weist das Hülsenteil einen sich in Axialrichtung des Hülsenteils durch das Hülsenteil erstreckenden Luftkanal auf, der an einem ersten axialen Ende, an dem das Innengewinde angeordnet ist, einen Auslass und an einem zweiten, dem ersten axialen Ende entgegengesetzten Ende einen Einlass umfasst. Im Bereich des Einlasses ist ein Rückschlagventil vorgesehen, das den Luftkanal druckdicht absperrt. Das Hülsenteil übernimmt somit die Funktion des herkömmlichen Reifenventils, wenn das Hülsenteil auf das Reifenventil aufgeschraubt wird.

Um das herkömmlich im Reifenventil vorgesehene Rückschlagventil dauerhaft in einer geöffneten Stellung zu halten, sodass der Luftkanal des Hülsenteils mit der Druckluft aus dem Reifen beaufschlagt wird und um den Luftdruck dann im Hülsenteil mit dem Aufnehmer erfassen zu können, weist das Hülsenteil im Bereich des Auslasses bevorzugt einen inneren Vorsprung auf, der in das Innengewinde zumindest hineinragt. Damit wird dieser innere Vorsprung beim Aufschrauben des Hülsenteils auf das Lufteinlassende des Reifenventils in das Reifenventil gedrückt und stößt das dort vorgesehene Rückschlagventil in die geöffnete Stellung und hält es in dieser geöffneten Stellung.

Das Aufnahmeteil umfasst zum Beispiel wenigstens eine Radialbohrung, die einerseits druckluftleitend mit dem Druckaufnehmer und andererseits druckluftleitend mit dem Luftkanal im Hülsenteil verbunden ist.

Bevorzugt weist das Hülsenteil eine äußere Oberfläche auf, die einer inneren Oberfläche des Aufnahmeteils gegenübersteht und entlang von welcher das Aufnahmeteil in Umfangsrichtung zur Axialrichtung um das Hülsenteil verdrehbar ist. Das Hülsenteil kann dann wenigstens eine Radialbohrung aufweisen, welche im Luftkanal und an der äußeren Oberfläche oder in einer in der äußeren Oberfläche vorgesehenen Umfangsnut mündet.

Die Radialbohrung im Aufnahmeteil mündet bevorzugt an der inneren Oberfläche des Aufnahmeteils oder in einer hierin vorgesehenen Umfangsnut.

Das Hülsenteil kann mit wenigstens einem Außenantrieb, beispielsweise einem Außensechskant, zum formschlüssigen Ansetzen eines Werkzeugs versehen sein. Damit können die Reibungskräfte, die entstehen, wenn das Hülsenteil auf das Reifenventil aufgeschraubt wird und sich dabei gegenüber dem Aufnahmeteil, insbesondere innerhalb des Aufnahmeteils verdreht, leicht überwunden werden.

Gemäß einer Ausführungsform der Erfindung ist ein solcher Außenantrieb, beispielsweise Außensechskant, am Einlassende des Hülsenteils vorgesehen. Eine andere Ausführungsform sieht vor, dass ein entsprechender Außenantrieb, beispielsweise Außensechskant, am Auslassende des Hülsenteils vorgesehen ist. Beide Ausführungsformen können auch miteinander kombiniert werden.

Besonders bevorzugt weist das Hülsenteil an seinem vom Innengewinde abgewandten axialen Ende, demnach am Einlassende, ein Außengewinde zum Aufschrauben einer Ventilkappe auf. Somit kann die vormals auf das Reifenventil aufgeschraubte Ventilkappe bevorzugt vom Reifenventil abgeschraubt werden, anschließend kann der Reifendrucksensor auf das Reifenventil aufgeschraubt werden und die Ventilkappe kann auf den Reifendrucksensor beziehungsweise den Hülsenteil des Reifendrucksensors aufgeschraubt werden.

Bei einer erfindungsgemäßen Anordnung mit einem Reifenventil und einem Reifendrucksensor weist das Reifenventil ein Lufteinlassende und ein entgegengesetztes Luftauslassende auf. Das Luftauslassende ist angeordnet, um innerhalb eines Reifenhohlraumes positioniert zu werden. Das Reifenventil umfasst einen Ventilschaft, der sich vom Lufteinlassende zum Luftauslassende erstreckt und ausgeführt ist, um durch eine Fahrzeugfelge gesteckt und dort gehalten zu werden. Der Reifendrucksensor ist am Lufteinlassende des Reifenventils befestigt, insbesondere auf dieses aufgeschraubt.

Der Ventilschaft kann insbesondere gebogen sein, beispielsweise mit einem Bogen zwischen 70° und 100°, bevorzugt mit einem Bogen von 90°.

Das Hülsenteil ist, wenn es durch das Aufnahmeteil hindurchgesteckt ist, vorteilhaft gegenüber dem Aufnahmeteil druckluftdicht abgedichtet, beispielsweise mit Dichtringen wie O-Ringen. Damit kann die Schnittstelle, über welche der Luftdruck aus dem Hülsenteil, insbesondere dessen Luftkanal, in das Aufnahmeteil und zu dem Druckaufnehmer geleitet wird, gegenüber der Umgebung abgedichtet werden.

Die Erfindung soll nachfolgend anhand eines Ausführungsbeispiels und den Figuren exemplarisch beschrieben werden.

Es zeigen:
- Figur 1: eine erfindungsgemäße Anordnung mit einem Reifenventil und einem Reifendrucksensor montiert an einer Kraftfahrzeugfelge;
- Figur 2: einen schematischen Axialschnitt durch den Reifendrucksensor aus der Figur 1.

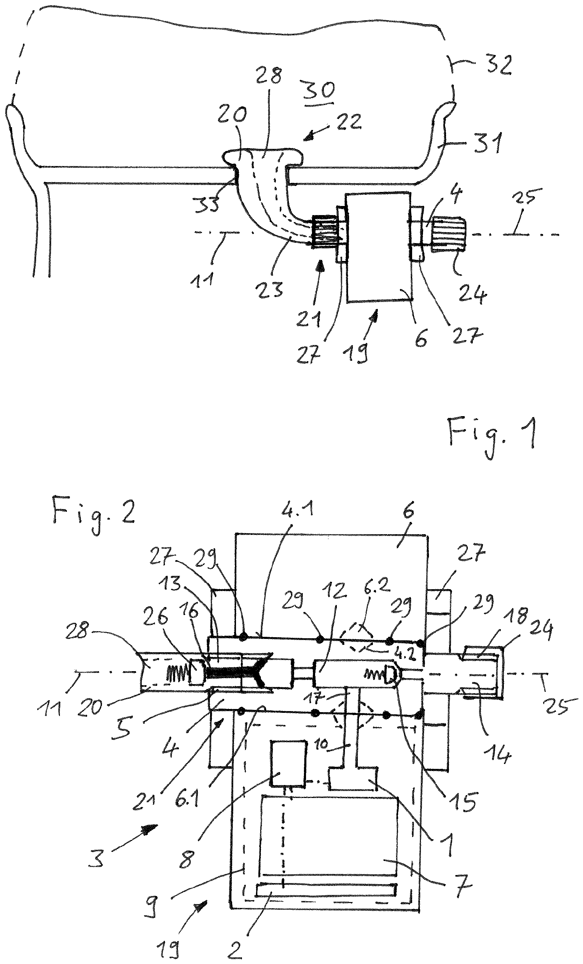

In der Figur 1 ist schematisch eine Fahrzeugfelge 31 gezeigt, die zusammen mit einem nur angedeuteten Reifen 32 einen Reifenhohlraum 30 abgedichtet gegenüber der Umgebung umschließt. Die Fahrzeugfelge 31 weist eine Bohrung 33, hier Radialbohrung, auf, in die ein Reifenventil 20 abgedichtet gegen die Fahrzeugfelge 31 eingesetzt ist.

Das Reifenventil 20 weist einen Ventilschaft 23 mit einem Lufteinlassende 21 und einem Luftauslassende 22 auf. Die Bezeichnung Einlass und Auslass bezieht sich vorliegend immer auf eine Strömungsrichtung, die sich einstellt, wenn der Reifen 32 aufgepumpt wird, also der Reifenhohlraum 30 über das Reifenventil 20 mit Druckluft befüllt wird. Auf das Lufteinlassende kann bei einem solchen Reifenventil 20 eine Ventilkappe 24 aufgeschraubt werden. Erfindungsgemäß ist jedoch anstelle der Ventilkappe 24 ein Reifendrucksensor 19 auf das Lufteinlassende 21 aufgeschraubt. Die Ventilkappe 24 ist hingegen wieder auf den Einlass 14 eines Hülsenteils 4 des Reifendrucksensors 19 aufgeschraubt.

Der Ventilschaft 23 umschließt einen Kanal 28, der den Reifenhohlraum 30 druckluftleitend mit dem Lufteinlassende 21 des Reifenventils 20 verbindet, wobei, wie nachfolgend noch erläutert wird, das Lufteinlassende 21 mittels eines Rückschlagventils 26 druckdicht abgesperrt wird, wenn ein Ventilkörper des Rückschlagventils 26 nicht vom Ventilsitz abgehoben wird, weil der Druck im Reifenhohlraum 30 und damit im Luftauslassende 22 größer als der Druck am Lufteinlassende 21 ist.

Der Ventilschaft 23 ist gebogen ausgeführt, hier abgewinkelt um 90°. Daher erstreckt sich das Lufteinlassende 21 entlang einer Axialrichtung 11, die parallel zur radial inneren Oberfläche der Fahrzeugfelge 31 und zu einer Drehachse des Reifens 32 ausgerichtet ist.

Das Hülsenteil 4 des Reifendrucksensors 19 ist um eine Verdrehachse 25, die mit der Axialrichtung 11 zusammenfällt, verdrehbar, um auf das Lufteinlassende 21 des Reifenventils 20 aufgeschraubt zu werden.

Der Reifendrucksensor 19 weist neben dem Hülsenteil 4 ferner ein Aufnahmeteil 6 auf, das verdrehbar gegenüber dem Hülsenteil 4 ist, sodass das Hülsenteil 4 auf das Reifenventil 20 aufgeschraubt werden kann, ohne dass das Aufnahmeteil 6 mit verdreht wird. Daher kann das Aufnahmeteil 6 zumindest in dem Umfangsabschnitt, der der radial inneren Oberfläche der Fahrzeugfelge 31 nicht unmittelbar gegenübersteht, mit einem vergleichsweise großen Durchmesser ausgeführt sein.

Um das Aufschrauben des Hülsenteils 4 auf das Reifenventil 20 zu erleichtern, sind am Hülsenteil 4 Außenantriebe 27 vorgesehen, hier jeweils ein Außenantrieb 27 auf jeder axialen Seite des Aufnahmeteils 6. Es könnte jedoch auch ein Außenantrieb 27 ausreichen oder auf beide Außenantriebe 27 könnte verzichtet werden.

Der oder die Außenantriebe 27 sind beispielsweise in Form eines Außensechskants ausgeführt, auf den ein Schraubenschlüssel oder ein Steckschlüsseleinsatz (eine "Nuss") eines Schraubwerkzeugs aufgesetzt werden kann.

Der Aufbau des Reifendrucksensors 19 ist besser aus der Figur 2 ersichtlich. In dieser werden für die sich entsprechenden Bauteile dieselben Bezugszeichen wie in der Figur 1 verwendet. Man erkennt, dass das Aufnahmeteil 6 eine radial innere Oberfläche 6.1 aufweist, welche eine radial äußere Oberfläche 4.1 des Hülsenteils umschließt. Beide Oberflächen 4.1, 6.1 sind durch Dichtringe 29 gegeneinander abgedichtet.

Das Aufnahmeteil 6 weist im Bereich eines axialen Endes ein Innengewinde 5 auf, mit welchem es auf ein entsprechendes Außengewinde des Reifenventils 20 aufgeschraubt ist. Im Bereich dieses Außengewindes des Reifenventils 20 an dessen Lufteinlassende 21 ist ferner das zuvor erwähnte Rückschlagventil 26 vorgesehen, das durch eine Federkraft in eine geschlossene Stellung gedrückt wird.

Um das Rückschlagventil 26 in seiner geöffneten Stellung zu halten, weist das Aufnahmeteil 6 einen inneren Vorsprung 16 auf, der in das Lufteinlassende 21 des Reifenventils 20 hineinragt und das Rückschlagventil 26 in dessen geöffnete Stellung drückt. Damit kann Druckluft aus dem Reifenventil 20 beziehungsweise aus dessen Kanal 28 in den Luftkanal 12 des Hülsenteils 4 strömen. Der Luftkanal 12 weist einen Einlass 14 an seinem dem Reifenventil 20 abgewandten axialen Ende auf, sowie einen Auslass 13 an seinem dem Reifenventil 20 zugewandten axialen Ende. Dadurch kann der Reifen, wie bei einem herkömmlichen Reifenventil 20, mit Druckluft aufgepumpt werden. Entsprechend ist auch im Bereich des Einlasses 14 ein Rückschlagventil 15 vorgesehen, das den Einlass 14 gegen ein Ausströmen von Luft abdichtet.

Auf den Einlass 14 ist ferner die Ventilkappe 24 aufgeschraubt. Hierfür ist das Hülsenteil 4 mit einem Außengewinde 18 versehen.

Aus dem Luftkanal 12 wird der Luftdruck über wenigstens eine Radialbohrung 17 im Hülsenteil 4 und wenigstens eine Radialbohrung 10 im Aufnahmeteil 6 zum Druckaufnehmer 1 geleitet. Um in jeder Verdrehstellung des Aufnahmeteils 6 gegenüber dem Hülsenteil 4 eine sichere druckluftleitende Verbindung herzustellen, kann in der radial äußeren Oberfläche 4.1 des Hülsenteils 4 eine Umfangsnut 4.2 vorgesehen sein. Zusätzlich oder alternativ kann in der radial inneren Oberfläche 6.1 des Aufnahmeteils 6 eine Umfangsnut 6.2 vorgesehen sein.

Der Druckaufnehmer 1 erfasst dementsprechend den Druck im Luftkanal 12, wobei dieser Druck dem Druck im Kanal 28 des Reifenventils 20 entspricht und dieser Druck wiederum dem Druck im Reifenhohlraum 30 entspricht, von Druckverlusten abgesehen. Somit erfasst der Druckaufnehmer 1 zumindest mittelbar den Druck im Reifenhohlraum 30.

Eine Steuervorrichtung 8 ist eingerichtet und mit dem Druckaufnehmer 1 und einem Sender 2 verbunden, um den vom Druckaufnehmer 1 erfassten Druck über den Sender 2 an einen Empfänger in einem Fahrzeug oder auch einem Handempfänger zu senden.

Zur Energieversorgung ist ein elektrischer Energiespeicher 7 vorgesehen.

Der erfindungsgemäße Reifendrucksensor 19 umfasst, wie dargestellt, somit ein Gehäuse 3, das sowohl das Hülsenteil 4 als auch das Aufnahmeteil 6 aufweist und alle wichtigen Komponenten zur Reifendruckerfassung aufnimmt. Das Aufnahmeteil 6 weist im gezeigten Ausführungsbeispiel einen vollständig vom Aufnahmeteil 6 umschlossenen Innenraum 9 auf, in dem der Druckaufnehmer 1, der Sender 2, die Steuervorrichtung 8 und der elektrische Energiespeicher 7 angeordnet sind. Der Innenraum 9 könnte auch mehrteilig ausgeführt sein und/oder weitere Bauteile, insbesondere elektronische Bauteile, beispielsweise eine Platine, auf der die Bauteile angeordnet sind, aufnehmen.

### Bezugszeichen

- 1: Druckaufnehmer
- 2: Sender
- 3: Gehäuse
- 4: Hülsenteil
- 4.1: äußere Oberfläche
- 4.2: Umfangsnut
- 5: Innengewinde
- 6: Aufnahmeteil
- 6.1: innere Oberfläche
- 6.2: Umfangsnut
- 7: elektrischer Energiespeicher
- 8: Steuervorrichtung
- 9: Innenraum
- 10: Radialbohrung
- 11: Axialrichtung
- 12: Luftkanal
- 13: Auslass
- 14: Einlass
- 15: Rückschlagventil
- 16: innerer Vorsprung
- 17: Radialbohrung
- 18: Außengewinde
- 19: Reifendrucksensor
- 20: Reifenventil
- 21: Lufteinlassende
- 22: Luftauslassende
- 23: Ventilschaft
- 24: Ventilkappe
- 25: Verdrehachse
- 26: Rückschlagventil
- 27: Außenantrieb
- 28: Kanal
- 29: Dichtring
- 30: Reifenhohlraum
- 31: Fahrzeugfelge
- 32: Reifen
- 33: Bohrung

## Patentansprüche

1. Reifendrucksensor (19)
1.1 mit einem Druckaufnehmer (1), einem Sender (2) und einem den Druckaufnehmer (1) und den Sender (2) tragenden Gehäuse (3), das eingerichtet ist, an einem Lufteinlassende (21) eines Reifenventils (20) befestigt zu werden; wobei
1.2 das Gehäuse (3) ein Hülsenteil (4) aufweist, das ein endseitiges Innengewinde (5) zum Aufschrauben des Hülsenteils (4) auf das Reifenventil (20) aufweist;
**dadurch gekennzeichnet, dass**
das Gehäuse (3) ferner ein Aufnahmeteil (6) umfasst, in dem oder an dem der Druckaufnehmer (1) und der Sender (2) angeordnet sind und das im montierten Zustand verdrehbar gegenüber dem Hülsenteil (4) am Hülsenteil (4) angeschlossen ist.

2. Reifendrucksensor (19) gemäß Anspruch 1, **dadurch gekennzeichnet, dass** das Aufnahmeteil (6) das Hülsenteil (4) in Umfangsrichtung teilweise oder vollständig umschließt und um das Hülsenteil (4) verdrehbar vom Hülsenteil (4) getragen wird.

3. Reifendrucksensor (19) gemäß Anspruch 2, **dadurch gekennzeichnet, dass** das Aufnahmeteil (6) exzentrisch zur Verdrehachse (25) und zum Hülsenteil (4) angeordnet ist.

4. Reifendrucksensor (19) gemäß einem der Ansprüche 1 bis 3, **dadurch gekennzeichnet, dass** am oder im Aufnahmeteil (6) ferner ein elektrischer Energiespeicher (7) und eine Steuervorrichtung (8) angeordnet sind, wobei die Steuervorrichtung (8) vom elektrischen Energiespeicher (7) mit elektrischer Energie versorgt wird und den Druckaufnehmer (1) sowie den Sender (2) steuert.

5. Reifendrucksensor (19) gemäß einem der Ansprüche 1 bis 4, **dadurch gekennzeichnet, dass** das Aufnahmeteil (6) wenigstens einen Innenraum (9) aufweist, in welchem der Druckaufnehmer (1) und der Sender (2) und insbesondere der Energiespeicher (7) und die Steuervorrichtung (8) vom Aufnahmeteil (6) vollständig umschlossen positioniert sind.

6. Reifendrucksensor (19) gemäß einem der Ansprüche 1 bis 5, **dadurch gekennzeichnet, dass** das Hülsenteil (4) einen sich in Axialrichtung (11) des Hülsenteils (4) durch das Hülsenteil (4) erstreckenden Luftkanal (12) aufweist, der an einem ersten axialen Ende, an welchem das Innengewinde (5) angeordnet ist, einen Auslass (13) und an einem zweiten, dem ersten axialen Ende entgegengesetzten Ende einen Einlass (14) aufweist, wobei im Bereich des Einlasses (14) ein Rückschlagventil (15) vorgesehen ist, das den Luftkanal (12) druckdicht absperrt.

7. Reifendrucksensor (19) gemäß Anspruch 6, **dadurch gekennzeichnet, dass** im Bereich des Auslasses (13) ein innerer Vorsprung (16) vorgesehen ist, der in das Innengewinde (5) hineinragt, um beim Aufschrauben des Innengewindes (5) auf das Lufteinlassende (21) des Reifenventils (20) einen dort vorgesehenes Rückschlagventil (26) zu öffnen.

8. Reifendrucksensor (19) gemäß einem der Ansprüche 6 oder 7, **dadurch gekennzeichnet, dass** das Aufnahmeteil (6) wenigstens eine Radialbohrung (10) aufweist, die einerseits druckluftleitend mit dem Druckaufnehmer (1) und andererseits druckluftleitend mit dem Luftkanal (12) verbunden ist.

9. Reifendrucksensor (19) gemäß Anspruch 8, **dadurch gekennzeichnet, dass** das Hülsenteil (4) eine äußere Oberfläche (4.1) aufweist, die einer inneren Oberfläche (6.1) des Aufnahmeteils (6) gegenübersteht und entlang von welcher das Aufnahmeteil (6) in Umfangsrichtung zur Axialrichtung (11) um das Hülsenteil (4) verdrehbar ist, wobei
das Hülsenteil (4) wenigstens eine Radialbohrung (17) aufweist, welche im Luftkanal (12) und an der äußeren Oberfläche (4.1) oder in einer hierin vorgesehenen Umfangsnut (4.2) mündet.

10. Reifendrucksensor (19) gemäß Anspruch 9, **dadurch gekennzeichnet, dass** die wenigstens eine Radialbohrung (10) des Aufnahmeteils (6) an der inneren Oberfläche (6.1) oder in einer hierin vorgesehenen Umfangsnut (6.2) mündet.

11. Reifendrucksensor (19) gemäß einem der Ansprüche 1 bis 10, **dadurch gekennzeichnet, dass** das Hülsenteil (4) wenigstens einen Außenantrieb (27), wie Außensechskant, zum formschlüssigen Ansetzen eines Schraubwerkzeugs aufweist.

12. Reifendrucksensor (19) gemäß einem der Ansprüche 1 bis 11, **dadurch gekennzeichnet, dass** das Hülsenteil (4) an seinem vom Innengewinde (5) abgewandten axialen Ende ein Außengewinde (18) zum Aufschrauben einer Ventilkappe (24) aufweist.

13. Anordnung mit einem Reifenventil (20) und einem Reifendrucksensor (19), wobei das Reifenventil (20) ein Lufteinlassende (21) und ein entgegengesetztes Luftauslassende (22), das angeordnet ist, um innerhalb eines Reifenhohlraumes (30) positioniert zu werden, umfasst, und das Reifenventil (20) einen Ventilschaft (23) aufweist, der sich vom Lufteinlassende (21) zum Luftauslassende (22) erstreckt und ausgeführt ist, um durch eine Fahrzeugfelge (31) gesteckt und dort gehalten zu werden, wobei der Reifendrucksensor (19) am Lufteinlassende (21) des Reifenventils (20) befestigt, insbesondere aufgeschraubt ist,
**dadurch gekennzeichnet, dass**
der Reifendrucksensor (19) gemäß einem der Ansprüche 1 bis 12 ausgeführt ist.

14. Anordnung gemäß Anspruch 13, **dadurch gekennzeichnet, dass** der Ventilschaft (23) gebogen, insbesondere mit einem Bogen von 70° bis 100°, ausgeführt ist.

## Claims

1. A tire pressure sensor (19)
1.1 having a pressure transducer (1), a transmitter (2), and a housing (3) supporting the pressure transducer (1) and the transmitter (2), which is configured to be fastened on an air inlet end (21) of a tire valve (20); wherein
1.2 the housing (3) has a sleeve part (4), which has an end-side internal thread (5) for screwing the sleeve part (4) onto the tire valve (20);
**characterized in that**
the housing (3) furthermore comprises a receptacle part (6), in which or on which the pressure transducer (1) and the transmitter (2) are arranged and which, in the installed state, is attached to the sleeve part (4) so it is pivotable in relation to the sleeve part (4).

2. The tire pressure sensor (19) according to Claim 1, **characterized in that** the receptacle part (6) partially or completely encloses the sleeve part (4) in the circumferential direction and is supported by the sleeve part (4) so it is pivotable around the sleeve part (4).

3. The tire pressure sensor (19) according to Claim 2, **characterized in that** the receptacle part (6) is arranged eccentrically to the pivot axis (25) and to the sleeve part (4).

4. The tire pressure sensor (19) according to any one of Claims 1 to 3, **characterized in that** furthermore an electrical energy accumulator (7) and a control device (8) are arranged on or in the receptacle part (6), wherein the control device (8) is supplied with electrical energy by the electrical energy accumulator (7) and controls the pressure transducer (1) and the transmitter (2).

5. The tire pressure sensor (19) according to any one of Claims 1 to 4, **characterized in that** the receptacle part (6) has at least one interior (9), in which the pressure transducer (1) and the transmitter (2) and in particular the energy accumulator (7) and the control device (8) are positioned completely enclosed by the receptacle part (6).

6. The tire pressure sensor (19) according to any one of Claims 1 to 5, **characterized in that** the sleeve part (4) has an air duct (12) extending in the axial direction (11) of the sleeve part (4) through the sleeve part (4), which has an outlet (13) at a first axial end, at which the internal thread (5) is arranged, and has an inlet (14) at a second end opposite to the first axial end, wherein a check valve (15), which blocks the air duct (12) in an airtight manner, is provided in the region of the inlet (14).

7. The tire pressure sensor (19) according to Claim 6, **characterized in that** an inner projection (16), which protrudes into the internal thread (5), is provided in the region of the outlet (13) in order, when the internal thread (5) is screwed onto the air inlet end (21) of the tire valve (20), to open a check valve (26) provided there.

8. The tire pressure sensor (19) according to one of Claims 6 or 7, **characterized in that** the receptacle part (6) has at least one radial hole (10), which is connected to conduct compressed air to the pressure transducer (1), on the one hand, and is connected to conduct compressed air to the air duct (12), on the other hand.

9. The tire pressure sensor (19) according to Claim 8, **characterized in that** the sleeve part (4) has an outer surface (4.1), which is opposite to an inner surface (6.1) of the receptacle part (6), and along which the receptacle part (6) is pivotable around the sleeve part (4) in the circumferential direction to the axial direction (11), wherein
the sleeve part (4) has at least one radial hole (17), which opens into the air duct (12) and at the outer surface (4.1) or into a circumferential groove (4.2) provided therein.

10. The tire pressure sensor (19) according to Claim 9, **characterized in that** the at least one radial hole (10) of the receptacle part (6) opens at the inner surface (6.1) or a circumferential groove (6.2) provided therein.

11. The tire pressure sensor (19) according to any one of Claims 1 to 10, **characterized in that** the sleeve part (4) has at least one external drive (27), such as an external hexagon, for the formfitting application of a screwing tool.

12. The tire pressure sensor (19) according to any one of Claims 1 to 11, **characterized in that** the sleeve part (4) has, at its axial end facing away from the internal thread (5), an external thread (18) for screwing on a valve cap (24).

13. An assembly having a tire valve (20) and a tire pressure sensor (19), wherein the tire valve (20) comprises an air inlet end (21) and an opposing air outlet end (22), which is arranged to be positioned inside a tire cavity (30), and the tire valve (20) has a valve shaft (23), which extends from the air inlet end (21) to the air outlet end (22) and is embodied to be inserted through a vehicle rim (31) and held there, wherein the tire pressure sensor (19) is fastened, in particular screwed onto the air inlet end (21) of the tire valve (20),
**characterized in that**
the tire pressure sensor (19) is embodied according to any one of Claims 1 to 12.

14. The assembly according to Claim 13, **characterized in that** the valve shaft (23) is embodied as curved, in particular with an arc of 70° to 100°.

## Revendications

1. Capteur de pression de pneumatique (19),
1.1 comprenant un transducteur de pression (1), un émetteur (2) et un boîtier (3) portant le transducteur de pression (1) et l'émetteur (2) et conçu pour être fixé à une extrémité d'entrée d'air (21) d'une valve de pneumatique (20) ; dans lequel
1.2 le boîtier (3) présente une partie manchon (4) qui présente un filetage intérieur (5) du côté de l'extrémité pour visser la partie manchon (4) sur la valve de pneumatique (20) ;
**caractérisé en ce que**
le boîtier (3) comprend en outre une partie de réception (6) dans laquelle ou sur laquelle sont disposés le transducteur de pression (1) et l'émetteur (2) et qui, à l'état monté, est reliée à la partie manchon (4) de manière à pouvoir tourner par rapport à la partie manchon (4).

2. Capteur de pression de pneumatique (19) selon la revendication 1, **caractérisé en ce que** la partie de réception (6) entoure partiellement ou complètement la partie manchon (4) dans la direction circonférentielle et est portée par la partie manchon (4) de manière à pouvoir tourner autour de la partie manchon (4).

3. Capteur de pression de pneumatique (19) selon la revendication 2, **caractérisé en ce que** la partie de réception (6) est disposée de manière excentrée par rapport à l'axe de rotation (25) et à la partie manchon (4) .

4. Capteur de pression de pneumatique (19) selon l'une des revendications 1 à 3, **caractérisé en ce qu'**un dispositif de stockage d'énergie électrique (7) et un dispositif de commande (8) sont en outre disposés sur ou dans la partie de réception (6), le dispositif de commande (8) étant alimenté en énergie électrique par le dispositif de stockage d'énergie électrique (7) et commandant le transducteur de pression (1) et l'émetteur (2).

5. Capteur de pression de pneumatique (19) selon l'une des revendications 1 à 4, **caractérisé en ce que** la partie de réception (6) présente au moins un espace intérieur (9) dans lequel le transducteur de pression (1) et l'émetteur (2) et en particulier le dispositif de stockage d'énergie (7) et le dispositif de commande (8) sont positionnés en étant complètement entourés par la partie de réception (6).

6. Capteur de pression de pneumatique (19) selon l'une des revendications 1 à 5, **caractérisé en ce que** la partie manchon (4) présente un conduit d'air (12) qui s'étend à travers la partie manchon (4) dans la direction axiale (11) de la partie manchon (4) et qui présente une sortie (13) à une première extrémité axiale à laquelle est disposé le filetage intérieur (5) et une entrée (14) à une deuxième extrémité, opposée à la première extrémité axiale, un clapet anti-retour (15) étant prévu dans la zone de l'entrée (14), lequel ferme le conduit d'air (12) de manière étanche à la pression.

7. Capteur de pression de pneumatique (19) selon la revendication 6, **caractérisé en ce que** dans la zone de la sortie (13) est prévue une saillie intérieure (16) qui fait saillie dans le filetage intérieur (5) pour, lorsque le filetage intérieur (5) est vissé sur l'extrémité d'entrée d'air (21) de la valve de pneumatique (20), ouvrir un clapet anti-retour (26) qui y est prévu.

8. Capteur de pression de pneumatique (19) selon l'une des revendications 6 ou 7, **caractérisé en ce que** la partie de réception (6) présente au moins un alésage radial (10) qui est relié d'une part de manière conductrice d'air comprimé au transducteur de pression (1) et d'autre part de manière conductrice d'air comprimé au conduit d'air (12).

9. Capteur de pression de pneumatique (19) selon la revendication 8, **caractérisé en ce que** la partie manchon (4) présente une surface extérieure (4.1) qui fait face à une surface intérieure (6.1) de la partie de réception (6) et le long de laquelle la partie de réception (6) peut tourner autour de la partie manchon (4) dans la direction circonférentielle par rapport à la direction axiale (11), la partie manchon (4) présentant au moins un alésage radial (17) qui débouche dans le conduit d'air (12) et sur la surface extérieure (4.1) ou dans une rainure circonférentielle (4.2) prévue dans celle-ci.

10. Capteur de pression de pneumatique (19) selon la revendication 9, **caractérisé en ce que** ledit au moins un alésage radial (10) de la partie de réception (6) débouche sur la surface intérieure (6.1) ou dans une rainure circonférentielle (6.2) prévue dans celle-ci.

11. Capteur de pression de pneumatique (19) selon l'une des revendications 1 à 10, **caractérisé en ce que** la partie manchon (4) présente au moins un moyen d'entraînement extérieur (27), tel qu'un hexagone extérieur, pour l'application par complémentarité de forme d'un outil de vissage.

12. Capteur de pression de pneumatique (19) selon l'une des revendications 1 à 11, **caractérisé en ce que** la partie manchon (4) présente à son extrémité axiale éloignée du filetage intérieur (5) un filetage extérieur (18) pour le vissage d'un bouchon de valve (24).

13. Agencement comprenant une valve de pneumatique (20) et un capteur de pression de pneumatique (19), dans lequel la valve de pneumatique (20) comprend une extrémité d'entrée d'air (21) et une extrémité de sortie d'air opposée (22) qui est disposée pour être positionnée à l'intérieur d'une cavité de pneumatique (30), et la valve de pneumatique (20) présente une tige de valve (23) qui s'étend de l'extrémité d'entrée d'air (21) à l'extrémité de sortie d'air (22) et est réalisée pour être insérée à travers une jante de véhicule (31) et y être maintenue, dans lequel le capteur de pression de pneumatique (19) est fixé, en particulier vissé, à l'extrémité d'entrée d'air (21) de la valve de pneumatique (20),
**caractérisé en ce que**
le capteur de pression de pneumatique (19) est réalisé selon l'une des revendications 1 à 12.

14. Agencement selon la revendication 13, **caractérisé en ce que** la tige de valve (23) est réalisée de manière courbe, en particulier avec une courbure de 70° à 100°.
